# EUROPEAN PATENT APPLICATION

(11) **EP 4 687 211 A1**
(43) Date of publication of application: **04.02.2026**
(21) Application number: 25192173.0
(22) Date of filing: 28.07.2025
(51) Int. Cl.: H01M 50/588, H01M 50/593, H01M 50/507, H01M 10/658, H01M 50/293, H01M 50/262, H01M 50/209, H01M 50/143

(54) **BATTERY PACK AND ENERGY STORAGE APPARATUS**

(30) Priority: 29.07.2024 CN 202421816627 U
(71) Applicant: HUAWEI DIGITAL POWER TECHNOLOGIES CO., LTD., Shenzhen Guangdong 518043 (CN)
(72) Inventor: LUO, Yingjie, Shenzhen, Guangdong, 518043 (CN); LUO, Ming, Shenzhen, Guangdong, 518043 (CN); XU, Yunxiang, Shenzhen, Guangdong, 518043 (CN); MA, Jianzhen, Shenzhen, Guangdong, 518043 (CN); LIU, Zechen, Shenzhen, Guangdong, 518043 (CN)
(74) Representative: Maiwald GmbH

(57) **Abstract**

This application provides a battery pack and an energy storage apparatus. The battery pack includes a housing, and a battery module, a plurality of busbars, and an insulated first isolation tape that are accommodated in the housing. The battery module includes a plurality of cells arranged in a length direction of the battery pack, the plurality of busbars are disposed on a surface on which poles of the plurality of cells are located, two adjacent cells in the plurality of cells are electrically connected via one of the plurality of busbars, and the first isolation tape extends in the length direction of the battery pack and covers a surface that is of the plurality of busbars and that is away from the plurality of cells. There is a gap between the first isolation tape and pressure relief valves of the plurality of cells in a direction in which the poles and the pressure relief valves are spaced from each other. This application resolves a problem that a short circuit occurs in a cell on which thermal runaway occurs and a surrounding cell because of a failure, caused by a high temperature, in designed insulation in a thermal runaway process of the pack. This leads to sparks, thermal runaway diffusion, and short-circuited melt-through of a box body of the pack, and finally leads to fire and explosion of the pack.

## Description

### TECHNICAL FIELD

This application relates to the field of energy storage technologies, and in particular, to a battery pack and an energy storage apparatus.

### BACKGROUND

A battery pack in a related technology includes a housing and a plurality of cells located in the housing. The plurality of cells are connected in series or in parallel via aluminum busbars. However, when thermal runaway occurs in some cells, the cells may spray electrolyte or some metallic impurities from pressure relief valves of the cells. When the metallic impurities fall, the metallic impurities may be in lap joint with different aluminum busbars, and cause different aluminum busbars to be short-circuited. In addition, when thermal runaway occurs in the cell, the cell expands and deforms, and the aluminum busbar disposed on the cell moves with expansion of the cell. As a result, a plurality of aluminum busbars may be in contact with a top wall of the housing, and the plurality of aluminum busbars may be short-circuited due to the top wall of the housing. A short circuit between busbars causes electrical sparks. This further deteriorates thermal runaway, and may even lead to explosion of the battery pack, causing a great safety risk.

### UTILITY MODEL CONTENT

Embodiments of this application provide a battery pack and an energy storage apparatus, to reduce a risk of a short circuit between a plurality of busbars connected to a plurality of cells. This effectively avoids further deterioration of thermal runaway of the battery pack, and improves safety.

According to a first aspect, an embodiment of this application provides a battery pack. The battery pack includes a housing, and a battery module, a plurality of busbars, and an insulated first isolation tape that are accommodated in the housing; the battery module includes a plurality of cells arranged in a length direction of the battery pack, the plurality of busbars are disposed on a surface on which poles of the plurality of cells are located, two adjacent cells in the plurality of cells are electrically connected via one of the plurality of busbars, and the plurality of busbars are arranged in the length direction of the battery pack; and the first isolation tape extends in the length direction of the battery pack and covers a surface that is of the plurality of busbars and that is away from the plurality of cells, and there is a gap between the first isolation tape and pressure relief valves of the plurality of cells in a direction in which the poles and the pressure relief valves are spaced from each other.

In this embodiment, a surface that is of the plurality of busbars and that faces a top wall of the housing is covered by the first isolation tape, and the first isolation tape is disposed between the plurality of busbars and the top wall of the housing. Therefore, when thermal runaway occurs in one or more cells in the battery pack, the cell expands and drives the busbar to move toward the top wall of the housing. However, the first isolation tape is located between the plurality of busbars and the top wall of the housing, and for this reason, under an isolation function of the first isolation tape, the busbar is not in direct contact with the top wall of the housing, so that a short circuit between the plurality of busbars due to the top wall of the housing can be avoided. This effectively avoids a probability of explosion of the battery pack, and reduces a probability of further deterioration of thermal runaway of the battery pack. In addition, when a metallic impurity is sprayed out of the cell during thermal runaway, because the surface that is of the plurality of busbars and that faces the top wall of the housing is covered by the first isolation tape, the sprayed metallic impurity falls on the first isolation tape, and is not in direct contact with the plurality of busbars. In this way, through isolation of the first isolation tape, a risk that the plurality of busbars are short-circuited by the metallic impurity can be effectively reduced. This can further effectively reduce a risk of further deterioration of the thermal runaway of the battery pack.

Based on a second embodiment of the embodiment of the first aspect, two columns of busbars are disposed on the surface on which the poles of the plurality of cells are located, the two columns of busbars are located on two sides of the pressure relief valves of the plurality of cells in the direction in which the poles and the pressure relief valves are spaced from each other, and each of the two columns of busbars includes the plurality of busbars spaced in the length direction of the battery pack; and two first isolation tapes respectively cover the two columns of busbars, and in the direction in which the poles and the pressure relief valves are spaced from each other, the two first isolation tapes are respectively located on the two sides of the pressure relief valves of the plurality of cells. In this embodiment, because an arrangement direction of the plurality of cells is the same, the pressure relief valves of the plurality of cells in each battery module are spaced in a row in the length direction of the battery pack. The busbar is usually conductive, and is usually a rigid aluminum busbar or copper busbar. The two columns of busbar groups are respectively located on the two sides of the pressure relief valves, that is, the busbar and the pressure relief valve are avoided. To be specific, the pressure relief valve cannot be aligned with the busbar, to avoid that the pressure relief valve cannot be opened in time, and further prevent the plurality of busbars from being short-circuited by a substance sprayed out of the pressure relief valve. In addition, in the direction in which the poles and the pressure relief valves are spaced from each other (namely, a width direction of the battery pack), the two first isolation tapes are respectively located on the two sides of the pressure relief valves of the plurality of cells. In this way, the pressure relief valves of the plurality of cells in each battery module are properly avoided from the busbar and the first isolation tape, to effectively avoid that the pressure relief valve of the cell cannot be effectively flushed open, reduce a risk that an impurity sprayed out of the pressure relief valve is in contact with the busbar, and reduce the risk that the plurality of busbars are short-circuited by the impurity. In addition, the first isolation tape is not disposed in positions of the pressure relief valves of the plurality of cells. Therefore, a usable area of the first isolation tape can be further reduced, and use costs of the first isolation tape can be reduced.

Based on a third embodiment of any one of the foregoing embodiments, each of the plurality of busbars is of a long strip-shaped structure extending in the length direction of the battery pack, and each busbar is completely covered by the first isolation tape; in the length direction of the battery pack, a length of the first isolation tape is greater than or equal to a length obtained by arranging the plurality of cells; and in the direction in which the poles and the pressure relief valves are spaced from each other, a width of the first isolation tape is greater than or equal to a width of the busbar. In this embodiment, a surface that is of each busbar and that is away from the plurality of cells is completely covered by the first isolation tape, so that a protection and isolation capability of the first isolation tape for the busbar can be effectively improved, and the risk of the short circuit between the plurality of busbars can be effectively reduced.

Based on a fourth embodiment of any one of the foregoing embodiments, the first isolation tape includes two integrally formed parts, one part covers the busbars, and the other part extends from the busbars to side walls of the plurality of cells, to cover a part or all of the side walls, and the side walls of the plurality of cells are a surface adjacent to a surface on which the poles are located. In this embodiment, one part covers an upper surface of the busbar group, and the other part extends from the busbars to the side walls of the plurality of cells, to cover a part or all of the side walls, so that a side surface that is of the busbar group and that is away from the pressure relief valve can be covered, and two adjacent busbar groups on two adjacent battery modules are covered by the other part of the first isolation tape. Therefore, even if the cell expands and drives the busbar to move, a short circuit does not occur between the adjacent busbar groups on the two adjacent battery modules because of isolation of the other part of the first isolation tape.

Based on a fifth embodiment of any one of the foregoing embodiments, the first isolation tape is of a flexible structure, and the surface that is of the plurality of busbars and that is away from the plurality of cells is disposed in contact with the first isolation tape. In this embodiment, because the first isolation tape is flexible, most regions of the surface that is of the busbar and that faces the top wall of the housing can be effectively attached to the first isolation tape. This effectively reduces a gap between the busbar and the first isolation tape, can basically prevent the metallic impurity from entering the first isolation tape and the busbar to be in contact with the busbar, and can effectively reduce the risk of the short circuit between the plurality of busbars due to the impurity sprayed out of the cell.

Based on a sixth embodiment of any one of the foregoing embodiments, the first isolation tape has insulation performance when the cell is in a normal state or in a thermal runaway state. Therefore, the first isolation tape in this embodiment can maintain insulation effect of the first isolation tape when thermal runaway occurs in the cell in the battery pack. Further, when thermal runaway occurs in the cell, the first isolation tape in this embodiment can still protect the busbar, and can still prevent the plurality of busbars from being short-circuited by the metallic impurity sprayed out of the cell or the metal housing. This can reduce the risk of further deterioration of the battery pack when thermal runaway occurs in the internal cell, reduce the risk of explosion of the battery pack, and effectively improve safety performance of the battery pack during thermal runaway.

Based on a seventh embodiment of any one of the foregoing embodiments, the first isolation tape has the insulation performance within a temperature range of less than 1000°C.

Based on an eighth embodiment of any one of the foregoing embodiments, the plurality of busbars are provided with fastening holes, and the fastening hole is configured to fasten the first isolation tape. In this embodiment, the plurality of busbars are provided with the fastening holes, to implement relative fastening between the plurality of busbars and the first isolation tape via the fastening holes, so as to avoid a change in a relative position between the first isolation tape and the busbar when the cell expands. In addition, because the first isolation tape and the plurality of busbars are fastened together, that is, the first isolation tape and the busbars may be tightly attached, the gap between the first isolation tape and the surface that is of the plurality of busbars and that faces the housing can be reduced, to effectively reduce a probability that the metallic impurity sprayed out of the cell enters the gap between the first isolation tape and the plurality of busbars.

Based on a ninth embodiment of any one of the foregoing embodiments, the busbar includes a plurality of bottom plates electrically connected to the poles of the plurality of cells and an arch-shaped plate integrally formed between two adjacent bottom plates in the plurality of bottom plates, the arch-shaped plate is higher than the bottom plate in a height direction of the battery pack, the bottom plates are provided with fastening holes, and the fastening hole is configured to be fastened to the first isolation tape. In this embodiment, because the bottom plate in a lower position is provided with the fastening hole, when the busbar and the first isolation tape are fastened together via the fastening hole, a gap between the first isolation tape and the bottom plate can be effectively reduced, so that the first isolation tape can better be attached to the uneven busbar, to better protect the busbar.

Based on a tenth embodiment of any one of the foregoing embodiments, the battery pack further includes a support, the support is disposed on a side that is of the battery module and that faces the top wall of the housing, the support includes a plurality of columns of strip-shaped groove groups spaced in the width direction of the battery pack, each of the plurality of columns of strip-shaped groove groups includes a plurality of strip-shaped grooves spaced in the length direction of the battery pack, a busbar is mounted in each strip-shaped groove, a through hole is disposed on a bottom surface of each of the plurality of strip-shaped grooves, and a positive pole or a negative pole of the cell is located in the through hole and is in contact with the busbar. In this embodiment, the busbar is connected to the positive pole or the negative pole of the cell via the through hole, and the busbar is mounted in the strip-shaped groove, so that a position of the busbar can be effectively limited, to ensure stability of the busbar, and ensure stability of a connection between the busbar and the positive pole or the negative pole of the cell.

Based on an eleventh embodiment of any one of the foregoing embodiments, the first isolation tape covers the busbar group and is fastened to the support. In this embodiment, the first isolation tape is fastened to the support, and the busbar is disposed in the strip-shaped groove of the support, so that the relative position between the first isolation tape and the busbar can remain fixed, and the first isolation tape stably covers the busbar.

Based on a twelfth embodiment of any one of the foregoing embodiments, the support further includes a plurality of fastening stands, the plurality of fastening stands are spaced in the strip-shaped groove in the length direction of the battery pack, the plurality of fastening stands are provided with fastening holes, and the fastening hole is configured to be fastened to the first isolation tape. In this embodiment, the first isolation tape is fastened via the plurality of fastening holes on the plurality of fastening stands, so that stability of fastening the first isolation tape can also be improved.

Based on a thirteenth embodiment of any one of the foregoing embodiments, there are a plurality of supports, there are a plurality of battery modules, in a height direction of the battery pack, one support is disposed on a side that is of each battery module and that faces a top wall of the housing, the plurality of supports are spaced in a width direction of the battery pack, the first isolation tape is of a flexible structure, and a part of the first isolation tape is located between two adjacent supports. In this embodiment, because the part of the first isolation tape is located between the two adjacent supports, in a high-temperature environment, even if the support is melted, the part of the first isolation tape is still located between adjacent busbar groups on two adjacent battery modules, so that a short circuit between the adjacent busbar groups on the two adjacent battery modules can be effectively avoided.

Based on a fourteenth embodiment of any one of the foregoing embodiments, the battery pack further includes a plurality of flexible and insulated second isolation tapes; and there are a plurality of battery modules, the plurality of battery modules are arranged in a width direction of the battery pack, the second isolation tape is disposed between two adjacent battery modules, and the second isolation tape is located between side walls that are of the two adjacent battery modules and that are disposed opposite to each other. In this embodiment, because the second isolation tape is resistant to a high temperature, when thermal runaway occurs in one or more cells, a high temperature generated by the cell still cannot affect performance of the second isolation tape. Therefore, in a high-temperature environment, insulation between cells of two adjacent battery modules can still be ensured, to prevent a short circuit between the cells of the two adjacent battery modules.

Based on a fifteenth embodiment of any one of the foregoing embodiments, each of the plurality of battery modules further includes end plates disposed at two ends in an arrangement direction of the plurality of cells and a cable tie configured to bind the plurality of cells and the end plates; and in the width direction of the battery pack, the second isolation tape is disposed on each of two sides of the battery module, and the second isolation tape is bound to two side surfaces of the plurality of cells in the width direction of the battery pack via the cable tie. In this embodiment, when the battery module is assembled, the second isolation tape is bound to the two side surfaces of the battery module in the width direction of the battery pack via the cable tie, so that the second isolation tape is properly fastened, and when the plurality of battery modules are subsequently mounted, the second isolation tape does not need to be fastened in another fastening manner, thereby reducing difficulty in subsequently mounting the plurality of battery modules. In addition, the cable tie is usually a metal cable tie, and an insulation coating of the cable tie is usually not resistant to a high temperature. Therefore, the second isolation tape is disposed between the plurality of cells and the cable tie, so that in a high-temperature environment, even if the insulation coating of the cable tie melts and fails, a short circuit between the plurality of cells due to the cable tie can be effectively avoided via the second isolation tape.

Based on a sixteenth embodiment of any one of the foregoing embodiments, in the height direction of the battery pack, the second isolation tape extends to be in contact with the first isolation tape. In this embodiment, the second isolation tape extends to be in contact with the first isolation tape, so that a part of the second isolation tape extends between adjacent busbar groups of adjacent battery modules, thereby avoiding a short circuit problem between the adjacent busbar groups on the adjacent battery modules.

According to a second aspect, an embodiment of this application provides an energy storage apparatus. The energy storage apparatus includes a cabinet and one or more battery packs according to any one of the foregoing embodiments, and the one or more battery packs are disposed in the cabinet.

### BRIEF DESCRIPTION OF DRAWINGS

To describe technical solutions in embodiments of this application or in the conventional technology more clearly, the following briefly describes accompanying drawings used in describing embodiments or the conventional technology.
FIG. 1 is a diagram of a structure of a battery pack according to an embodiment of this application;
FIG. 2 is a diagram of an exploded structure of the battery pack in FIG. 1;
FIG. 3 is a diagram of an exploded structure of a partial structure of the battery pack obtained by removing a housing according to the embodiment in FIG. 1;
FIG. 4 is a diagram of a partial structure of the battery pack according to the embodiment in FIG. 1;
FIG. 5 is a partial front view of a partial structure of the battery pack according to the embodiment in FIG. 1;
FIG. 6 is a partial left view of a partial structure of the battery pack according to the embodiment in FIG. 1;
FIG. 7 is a partially enlarged diagram of a position A in FIG. 4;
FIG. 8 is a diagram of a structure of a support according to the embodiment in FIG. 3; and
FIG. 9 is a diagram of an exploded structure of a battery module in the battery pack according to the embodiment in FIG. 1.

### Descriptions of reference numerals:

X: length direction of a battery pack; Y: width direction of the battery pack; Z: height direction of the battery pack;
4: battery pack; 7: housing; 7a: upper cover; 7b: lower box body; 71: top wall of the housing;
10: battery module; 11: cell; 101: pole; 111: positive pole; 112: negative pole; 113: pressure relief valve; 114: side wall of the cell; 115: surface on which the pole of the cell is located; 12: end plate; 13: cable tie;
21: busbar; 201: fastening hole; 211: surface that is of the busbar and that is away from a plurality of cells; 212: surface that is of the busbar and that is away from the pressure relief valve; 213: bottom plate; 214: arch-shaped plate;
31: first isolation tape; 311: one part; 312: the other part; 32: second isolation tape; 33: third isolation tape;
40: support; 41: strip-shaped groove group; 411: strip-shaped groove; 412: through hole; 42: limiting groove; 43: fastening stand; 431: fastening hole; and
50: flexible printed circuit.

### DESCRIPTION OF EMBODIMENTS

The following first explains some terms in embodiments of this application.

In the specification, claims, and accompanying drawings of embodiments of this application, terms "first", "second", "third", "fourth", and the like are intended to distinguish between similar objects but do not necessarily indicate a specific order or sequence. It should be understood that data used in such a way is interchangeable in proper circumstances, so that embodiments of this application described herein can be, for example, implemented in an order other than the order illustrated or described herein. In addition, terms "include", "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

In this specification, terms such as "verticality" and "parallelism" are explained.

Verticality: Verticality defined in this application is not limited to an absolute vertical intersection (an included angle is 90 degrees) relationship, allows a non-absolute vertical intersection relationship due to factors such as an assembly tolerance, a design tolerance, and a structural flatness, and allows an error within a small angle range. For example, a relationship within an assembly error range of 80 degrees to 100 degrees can be understood as the vertical relationship.

Parallelism: Parallelism defined in this application is not limited to absolute parallelism. A definition of the parallelism herein can be understood as basic parallelism, and allow a case of non-absolute parallelism due to factors such as an assembly tolerance, a design tolerance, and a structural flatness. In this case, a sliding matching part and a first door panel are not absolutely parallel, but in this application it is also considered as parallel.

To facilitate understanding of an energy storage apparatus provided in embodiments of this application, the following first describes an application scenario of the energy storage apparatus. The energy storage apparatus is a system that can store electric energy via a specific medium and release the stored energy to generate electricity when necessary. The energy storage apparatus may be used as a load balancing apparatus and a backup power supply in a scenario like an industrial and commercial park, a home life environment, a large-scale ground power supply station, or a photovoltaic plus storage system. Application of the energy storage apparatus is briefly described by using the scenario of the photovoltaic plus storage system as an example. The photovoltaic plus storage system may usually include a photovoltaic module, a power conversion sy stem, an energy storage apparatus, and a grid-connected inverter. The photovoltaic module may convert light energy into electric energy in a form of a direct current, and output the electric energy to the grid-connected inverter. The grid-connected inverter may convert the electric energy in the form of the direct current into electric energy in a form of an alternating current, and transmit the electric energy in the form of the alternating current to a grid, to implement grid-connection of the photovoltaic plus storage system. When electric energy generated by the photovoltaic module exceeds electric energy required by the grid, the energy storage apparatus may store a part of the electric energy output by the photovoltaic inverter; and when the electric energy output by the photovoltaic module cannot meet electric energy required by the grid, the energy storage apparatus outputs the stored electric energy to the grid, to provide a more stable direct current source for the grid. The power conversion system may convert a grid voltage into a power supply voltage of the energy storage apparatus; or convert a voltage stored in the energy storage apparatus into a grid voltage, and output the grid voltage to the grid.

In addition, based on different requirements on power consumption of application scenarios of energy storage apparatuses, the energy storage apparatuses may be further classified into a cabinet-level energy storage apparatus and a container-level energy storage apparatus.

In some embodiments, the energy storage apparatus includes a cabinet body and a battery rack disposed in the cabinet body.

The battery rack includes a plurality of stacked battery packs.

The energy storage apparatus may further include a rack control module and a power converter. The rack control module and the power converter are disposed in the cabinet body.

In some embodiments, the power converter includes a PCS (power conversion system) converter, and the rack control module is connected between the PCS converter and the battery rack. In this design, the PCS converter may convert a direct current of the battery rack into an alternating current to supply power to an external load. In addition, when a current between the battery rack and the PCS converter is excessively large, the PCS converter can be disconnected from the battery rack in time via the rack control module, to prevent an accident like fire from occurring in the battery rack or the external load.

In some implementations, when a voltage output by the battery rack is lower than a rated voltage, to ensure stability of an output voltage of the energy storage apparatus, the power converter further includes a DC/DC (direct current/direct current) converter. The DC/DC converter is connected between the PCS converter and the rack control module, and the rack control module is connected between the DC/DC converter and the battery rack, to boost or buck, via the DC/DC converter, the voltage output by the battery rack, to ensure that the voltage transmitted to the PCS converter remains stable, and ensure the stability of the output voltage of the energy storage apparatus. In addition, when the current between the battery rack and the PCS converter is excessively large, the current between the PCS converter and the battery rack may be cut off in time via the rack control module, to prevent the accident like fire from occurring in the battery rack or the external load.

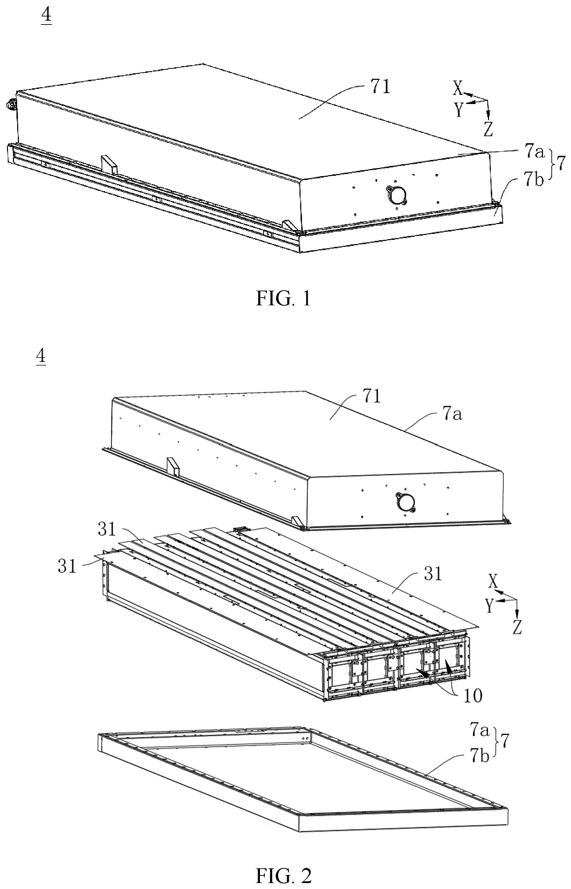

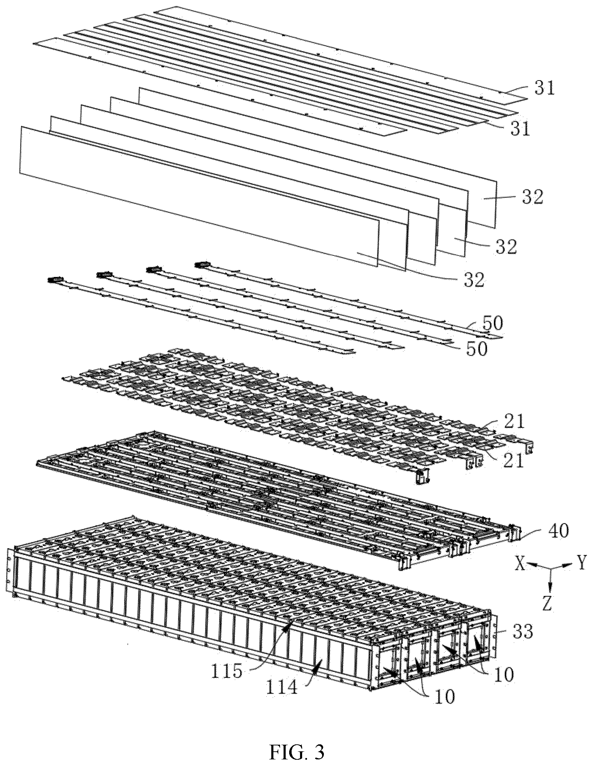

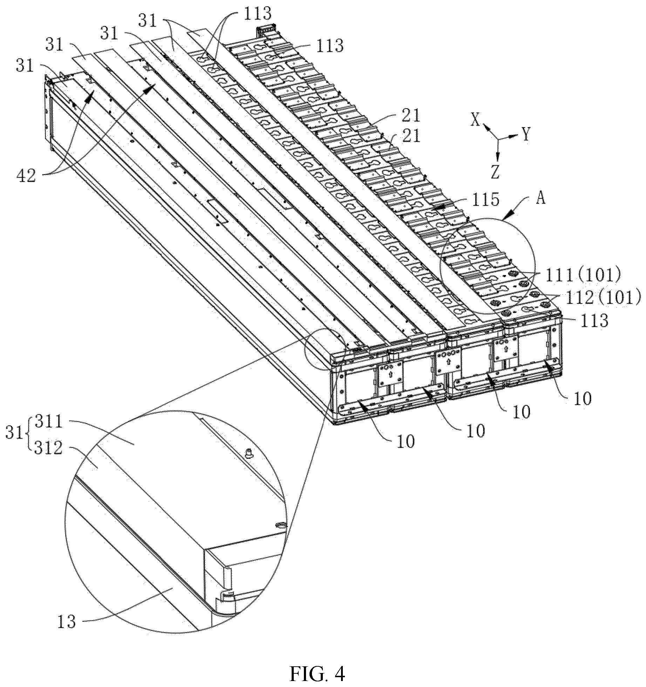

FIG. 1 is a diagram of a structure of a battery pack 4 according to an embodiment of this application. FIG. 2 is a diagram of an exploded structure of the battery pack 4 in FIG. 1. FIG. 3 is a diagram of an exploded structure of a partial structure of the battery pack 4 obtained by removing a housing 7 according to the embodiment in FIG. 1. FIG. 4 is a diagram of a partial structure of the battery pack 4 according to the embodiment in FIG. 1.

Refer to FIG. 1 and FIG. 2. The battery pack 4 includes the housing 7 and a battery module 10 accommodated in the housing 7.

The housing 7 includes an upper cover 7a and a lower box body 7b. The upper cover 7a is fastened to the lower box body 7b, and forms an accommodation cavity with the lower box body 7b. The battery module 10 is accommodated in the accommodation cavity. Specifically, the battery module 10 is first mounted to the lower box body 7b, and then the upper cover 7a is fastened to the lower box body 7b, to implement packaging of the battery module 10.

Refer to FIG. 3 and FIG. 4. There may be a plurality of battery modules 10, and each battery module 10 includes a plurality of cells 11 arranged in a length direction X of the battery pack 4. The plurality of battery modules 10 are arranged in a width direction Y of the battery pack 4.

Certainly, in some other implementations, there may alternatively be one battery module 10.

Refer to FIG. 2 to FIG. 4. To enable the plurality of cells 11 to be connected in series or in parallel, the battery pack 4 further includes a plurality of busbars 21 configured to connect the plurality of cells 11 in the plurality of battery modules 10 in series or in parallel. The plurality of busbars 21 are disposed on a surface 115 on which poles 101 of the plurality of cells 11 in the battery module 10 are located. In other words, the plurality of busbars 21 are disposed on a side that is of the plurality of battery modules 10 and that faces the housing 7, that is, the plurality of busbars 21 are located between the plurality of battery modules 10 and the housing 7. It may be understood that the plurality of busbars 21 are usually required to connect the plurality of cells 11 in each battery module 10 in series or in parallel, and the battery modules 10 are also connected in series or in parallel via the busbars 21. For example, two or more adjacent cells 11 in the plurality of cells 11 are electrically connected via one of the plurality of busbars 21. In other words, one busbar 21 may be electrically connected to two or more adjacent cells 11, so that the plurality of cells 11 are connected in series or in parallel.

Refer to FIG. 2 and FIG. 4. For example, in a specific implementation, positive poles 111, negative poles 112, and the like of the plurality of cells 11 in the plurality of battery modules 10 are all disposed facing a top wall 71 of the housing 7, to facilitate connection of the busbar 21. To improve stability of a connection between the busbar 21 and the positive pole 111 and the negative pole 112 of the cell 11, a rigid aluminum busbar, copper busbar, or the like is usually used to connect the positive pole 111 and the negative pole 112 of the cell 11.

However, when thermal runaway occurs in the cell 11, the cell 11 expands, and the expanded cell 11 drives the busbar 21 to move toward the top wall 71 of the housing 7. Therefore, there is a risk that the busbar 21 is in contact with the top wall 71 of the housing 7, and further, there is a risk that the plurality of busbars 21 are short-circuited due to the top wall 71 of the housing 7. The short circuit between the plurality of busbars 21 may cause explosion of the battery pack 4 due to electrical sparks, further expand a thermal runaway range of the cell 11, and cause further deterioration of the thermal runaway of the battery pack 4. In addition, when thermal runaway occurs in the cell 11, electrolyte and some metallic impurities, such as scraps of electrode plates and battery tabs, are directly sprayed out of a pressure relief valve 113 of the cell 11. When the sprayed impurities fall, the impurities may be in lap joint with a plurality of different busbars 21. As a result, the plurality of busbars 21 are short-circuited due to the metallic impurity, and further deterioration of the thermal runaway of the battery pack 4 is caused.

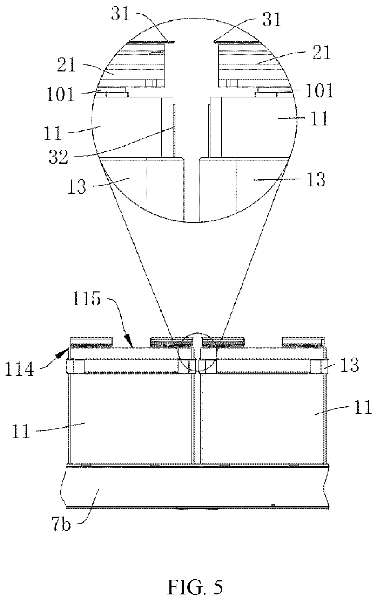

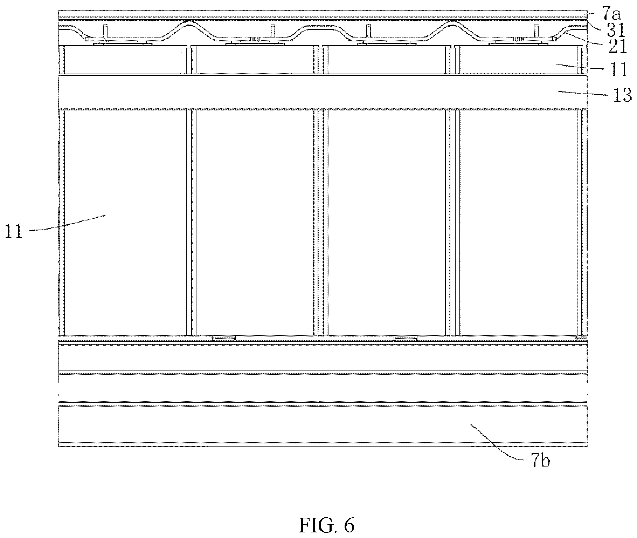

FIG. 5 is a partial front view of a partial structure of the battery pack 4 according to the embodiment in FIG. 1. FIG. 6 is a partial left view of a partial structure of the battery pack 4 according to the embodiment in FIG. 1.

Refer to FIG. 2 to FIG. 6. To resolve a problem that the plurality of busbars 21 are short-circuited due to the top wall 71 of the housing 7 or the impurity during thermal runaway, the battery pack 4 in this embodiment of this application further includes an insulated first isolation tape 31. The first isolation tape 31 covers the plurality of busbars 21, for example, covers a surface 211 that is of the plurality of busbars 21 and that is away from the plurality of cells 11, and the first isolation tape 31 is located between the plurality of busbars 21 and the housing 7. In other words, the plurality of busbars 21 are isolated from the housing 7 via the first isolation tape 31. In other words, in a height direction Z of the battery pack 4, the first isolation tape 31 is disposed between the plurality of busbars 21 and the housing 7. The surface 211 that is of the plurality of busbars 21 and that is away from the plurality of cells 11 is covered by the first isolation tape 31, and the first isolation tape 31 is disposed between the plurality of busbars 21 and the housing 7. Therefore, when thermal runaway occurs in one or more cells 11 in the battery pack 4, the cell 11 expands and drives the busbar 21 to move toward the housing 7. However, the first isolation tape 31 is located between the plurality of busbars 21 and the housing 7, and for this reason, under an isolation function of the first isolation tape 31, the busbar 21 is not in direct contact with the housing 7, so that the short circuit between the plurality of busbars 21 due to the housing 7 can be avoided. This effectively avoids a probability of explosion of the battery pack 4, and reduces a probability of further deterioration of the thermal runaway of the battery pack 4. In addition, when the metallic impurity is sprayed out of the cell 11 during thermal runaway, because the surface 211 that is of the plurality of busbars 21 and that is away from the plurality of cells 11 is covered by the first isolation tape 31, the sprayed metallic impurity falls on the first isolation tape 31, and is not in direct contact with the plurality of busbars 21. In this way, through isolation of the first isolation tape 31, a risk that the plurality of busbars 21 are short-circuited by the metallic impurity can be effectively reduced. This can further effectively reduce a risk of further deterioration of the thermal runaway of the battery pack 4.

In addition, there is a gap between the first isolation tape 31 and the pressure relief valves 113 of the plurality of cells 11 in a direction in which the poles 101 and the pressure relief valves 113 are spaced from each other. To be specific, in the height direction Z of the battery pack 4, the first isolation tape 31 does not cover the pressure relief valve 113 of the cell 11, that is, in the height direction Z of the battery pack 4, the first isolation tape 31 is not aligned with the pressure relief valve 113 of the cell 11. It may be understood that the direction in which the poles 101 and the pressure relief valves 113 are spaced from each other is a direction in which the poles 101 and the pressure relief valves 113 are arranged. In this embodiment, because there is the gap between the first isolation tape 31 and the pressure relief valves 113 of the plurality of cells 11 in the direction in which the poles 101 and the pressure relief valves 113 are spaced from each other, the pressure relief valve 113 is not covered by the first isolation tape 31. Therefore, when thermal runaway occurs in the cell 11, normal opening of the pressure relief valve 113 of the cell 11 is not affected by the first isolation tape 31, so that disposing of the first isolation tape 31 does not affect normal pressure relief of the cell 11, and a risk of explosion of the cell 11 can be reduced. In this embodiment, the first isolation tape 31 covers the surface 211 that is of the plurality of busbars 21 and that is away from the plurality of cells 11, and there is the gap between the first isolation tape 31 and the pressure relief valves 113 of the plurality of cells 11 in the direction in which the poles 101 and the pressure relief valves 113 are spaced from each other, so that without affecting normal opening of the pressure relief valve 113 of the cell 11, the risk of the short circuit of the plurality of busbars 21 can be effectively reduced, thereby effectively improving safety performance of the battery pack 4.

Refer to FIG. 2 to FIG. 4. In some implementations, the plurality of busbars 21 are arranged in the length direction X of the battery pack 4, and the first isolation tape 31 extends in the length direction X of the battery pack 4. In other words, the first isolation tape 31 is of a long strip-shaped structure, so that each first isolation tape 31 can cover a plurality of busbars 21. This facilitates a layout in which the first isolation tape 31 covers the plurality of busbars 21, helps the first isolation tape 31 avoid the pressure relief valves 113 of the plurality of cells 11, and makes an overall arrangement layout of the first isolation tape 31 simpler and more proper.

Refer to FIG. 2 to FIG. 6. In some embodiments, the first isolation tape 31 is of a flexible structure, and the surface 211 that is of the plurality of busbars 21 and that is away from the plurality of cells 11 is disposed in contact with the first isolation tape 31. The first isolation tape 31 is attached to or basically attached to the surface 211 that is of the plurality of busbars 21 and that is away from the plurality of cells 11, that is, a gap between the first isolation tape 31 and the surface 211 that is of the plurality of busbars 21 and that is away from the plurality of cells 11 is small enough, so that the metallic impurity sprayed out of the cell 11 basically cannot enter the gap between the first isolation tape 31 and the plurality of busbars 21.

To better protect the plurality of busbars 21 via the first isolation tape 31, in some implementations, in the height direction Z of the battery pack 4, the surface 211 that is of the plurality of busbars 21 and that is away from the plurality of cells 11 has a high part and a low part, that is, the surface that is of the busbar 21 and that is away from the plurality of cells 11 is uneven. In other words, at least a part of the surface 211 that is of the plurality of busbars 21 and that is away from the plurality of cells 11 is a curved surface. Because the first isolation tape 31 is of the flexible structure, the first isolation tape 31 can be basically attached to most regions of the surface 211 that is of the plurality of busbars 21 and that is away from the plurality of cells 11. In this way, the most regions of the surface 211 that is of the busbar 21 and that is away from the plurality of cells 11 can all be effectively attached to the first isolation tape 31. This effectively reduces the gap between the busbar 21 and the first isolation tape 31, can basically prevent the metallic impurity from entering the first isolation tape 31 and the busbar 21 to be in contact with the busbar 21, and can effectively reduce the risk of the short circuit between the plurality of busbars 21 due to the impurity sprayed out of the cell 11.

In some embodiments, the first isolation tape 31 has insulation performance when the cell 11 is in a normal state or in a thermal runaway state. For example, in some implementations, the first isolation tape 31 has the insulation performance within a temperature range of less than 1000°C.

For another example, a high-temperature resistance capability of the first isolation tape 31 is stronger than that of a high-temperature thermosetting plate. For example, the high-temperature resistance capability of the first isolation tape 31 is stronger than that of an FR-4 (epoxy) plate. For example, in some implementations, the first isolation tape 31 is a ceramic composite strap.

In this embodiment of this application, the first isolation tape 31 does not lose insulation effect of the first isolation tape 31 in the high-temperature environment within the range of 1000°C, and a temperature of the cell 11 in the battery pack 4 during thermal runaway is usually less than 1000°C. Therefore, the first isolation tape 31 in this embodiment can maintain the insulation effect of the first isolation tape 31 when thermal runaway occurs in the cell 11 in the battery pack 4. Further, when thermal runaway occurs in the cell 11, the first isolation tape 31 in this embodiment can still protect the busbar 21, and can still prevent the plurality of busbars 21 from being short-circuited by the metallic impurity sprayed out of the cell 11 or the metal housing 7. This can reduce the risk of further deterioration of the battery pack 4 when thermal runaway occurs in the internal cell 11, reduce the risk of explosion of the battery pack 4, and effectively improve the safety performance of the battery pack 4 during thermal runaway.

It may be understood that the first isolation tape 31 and the plurality of busbars 21 are arranged in various manners. For example, in some implementations, a plurality of first isolation tapes 31 may be selectively disposed at an upper part of the plurality of busbars 21, so that the housing 7 is isolated from the plurality of busbars 21 via the plurality of first isolation tapes 31.

Refer to FIG. 4 to FIG. 6. To effectively reduce the risk of the short circuit between the plurality of busbars 21 via the first isolation tape 31, it is also important to properly arrange the plurality of cells 11, the plurality of busbars 21, the first isolation tape 31, and the like.

For the plurality of cells 11 in each battery module 10, an arrangement direction of the plurality of cells 11 is the same, that is, a long side direction, a wide side direction, and a height direction of the plurality of cells 11 are all the same, so that the plurality of cells 11 can be arranged in a uniform manner. Specifically, the long side direction of the plurality of cells 11 is consistent with the width direction Y of the battery pack 4, and the arrangement direction of the plurality of cells 11, namely, a width direction of the plurality of cells 11, is also consistent with the length direction X of the battery pack 4. The pressure relief valve 113 is usually disposed on a side that is of the cell 11 and that faces the top wall 71 of the housing 7. Therefore, in the long side direction of the cell 11, the pressure relief valves 113 of the plurality of cells 11 are located between the positive pole 111 and the negative pole 112, and are spaced from the positive pole 111 and the negative pole 112. Because the arrangement direction of the plurality of cells 11 is the same, the pressure relief valves 113 of the plurality of cells 11 in each battery module 10 are spaced in a row in the length direction X of the battery pack 4. The busbar 21 is usually conductive, and is usually a rigid aluminum busbar or copper busbar. Therefore, the busbar 21 and the pressure relief valve 113 are avoided. To be specific, the pressure relief valve 113 cannot be aligned with the busbar 21, to avoid that the pressure relief valve 113 cannot be opened in time, and further prevent the plurality of busbars 21 from being short-circuited by a substance sprayed out of the pressure relief valve 113.

Refer to FIG. 2 to FIG. 6. To avoid the busbar 21 and the pressure relief valve 113, in some implementations, in the width direction Y of the battery pack 4, a column of busbars 21 are disposed on each of two sides of each of the pressure relief valves 113 of the plurality of cells 11 in each battery module 10. Each column of busbars 21 includes a plurality of busbars 21 spaced in the length direction X of the battery pack 4. In other words, for the two columns of busbars 21 on the plurality of cells 11 in each battery module 10, because the two columns of busbars 21 are respectively located on the two sides of the pressure relief valve 113, two first isolation tapes 31 respectively cover the two columns of busbars 21. In the direction in which the poles 101 and the pressure relief valves 113 are spaced from each other (namely, the width direction Y of the battery pack 4), the two first isolation tapes 31 are respectively located on the two sides of each of the pressure relief valves 113 of the plurality of cells 11. In this way, the pressure relief valves 113 of the plurality of cells 11 in each battery module 10 are all properly avoided from the busbar 21 and the first isolation tape 31, to effectively avoid that the pressure relief valve 113 of the cell 11 cannot be effectively flushed open, reduce the risk that the impurity sprayed out of the pressure relief valve 113 is in contact with the busbar 21, and reduce the risk that the plurality of busbars 21 are short-circuited by the impurity. In addition, the first isolation tape 31 is not disposed in positions of the pressure relief valves 113 of the plurality of cells 11. Therefore, a usable area of the first isolation tape 31 can be further reduced, and use costs of the first isolation tape 31 can be reduced.

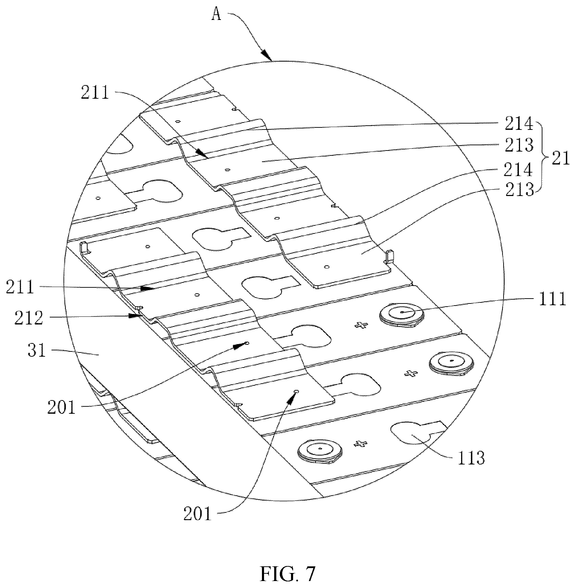

FIG. 7 is a partially enlarged diagram of a position A in FIG. 4.

Refer to FIG. 4 and FIG. 7. Each of the plurality of busbars 21 is of a long strip-shaped structure extending in the length direction X of the battery pack 4, and each busbar 21 is completely covered by the first isolation tape 31. In other words, the surface 211 that is of each busbar 21 and that is away from the plurality of cells 11 is completely covered by the first isolation tape 31, so that a protection and isolation capability of the first isolation tape 31 for the busbar 21 can be effectively improved, and the risk of the short circuit between the plurality of busbars 21 can be effectively reduced.

Refer to FIG. 4 and FIG. 7. For example, in some implementations, in the length direction X of the battery pack 4, a length of the first isolation tape 31 is greater than or equal to a length obtained by arranging the plurality of cells 11, and the plurality of busbars 21 are disposed on the surface 115 on which the poles 101 of the plurality of cells 11 are located. Therefore, the first isolation tape 31 can completely cover the plurality of busbars 21 in the arrangement direction of the plurality of cells 11 (the length direction X of the battery pack 4). In the direction in which the poles 101 and the pressure relief valves 113 are spaced from each other, a width of the first isolation tape 31 is greater than or equal to a width of the busbar 21, so that the first isolation tape 31 can completely cover the plurality of busbars 21 in the direction in which the poles 101 and the pressure relief valves 113 are spaced from each other.

Refer to FIG. 4 and FIG. 7. The cell 11 expands during thermal runaway, if a part of the surface 211 that is of the busbar 21 and that is away from the plurality of cells 11 is no longer covered by the first isolation tape 31 due to relative displacement between the busbar 21 on the cell 11 and the first isolation tape 31 on the busbar 21, the part that is of the busbar 21 and that is not covered by the first isolation tape 31 has a risk of being short-circuited. To resolve this problem and avoid increasing assembly difficulty, in some embodiments, the plurality of busbars 21 are provided with fastening holes 201, to implement relative fastening between the plurality of busbars 21 and the first isolation tape 31 via the fastening holes 201, so as to avoid a change in a relative position between the first isolation tape 31 and the busbar 21 when the cell 11 expands. In addition, because the first isolation tape 31 and the plurality of busbars 21 are fastened together, that is, the first isolation tape 31 and the busbars 21 may be tightly attached, a gap between the first isolation tape 31 and a surface that is of the plurality of busbars 21 and that faces the housing 7 can be reduced, to effectively reduce a probability that the metallic impurity sprayed out of the cell 11 enters the gap between the first isolation tape 31 and the plurality of busbars 21. It may be understood that the plurality of busbars 21 are provided with the plurality of fastening holes 201. Specifically, the first isolation tape 31 may be fastened to the plurality of busbars 21 through fit between screws, rivets, or the like and the fastening holes 201.

Refer to FIG. 4 and FIG. 7. In some implementations, the busbar 21 includes a plurality of bottom plates 213 electrically connected to the poles 101 of the plurality of cells 11 and an arch-shaped plate 214 integrally formed between two adjacent bottom plates 213 in the plurality of bottom plates 213, and the arch-shaped plate 214 is higher than the bottom plate 213 in the height direction Z of the battery pack 4, the bottom plates 213 are provided with the fastening holes 201, and the fastening hole 201 is configured to be fastened to the first isolation tape 31. In this implementation, because the bottom plate 213 in a lower position is provided with the fastening hole 201, when the busbar 21 and the first isolation tape 31 are fastened together via the fastening hole 201, a gap between the first isolation tape 31 and the bottom plate 213 can be effectively reduced, so that the first isolation tape 31 can better be attached to the uneven busbar 21, to better protect the busbar 21.

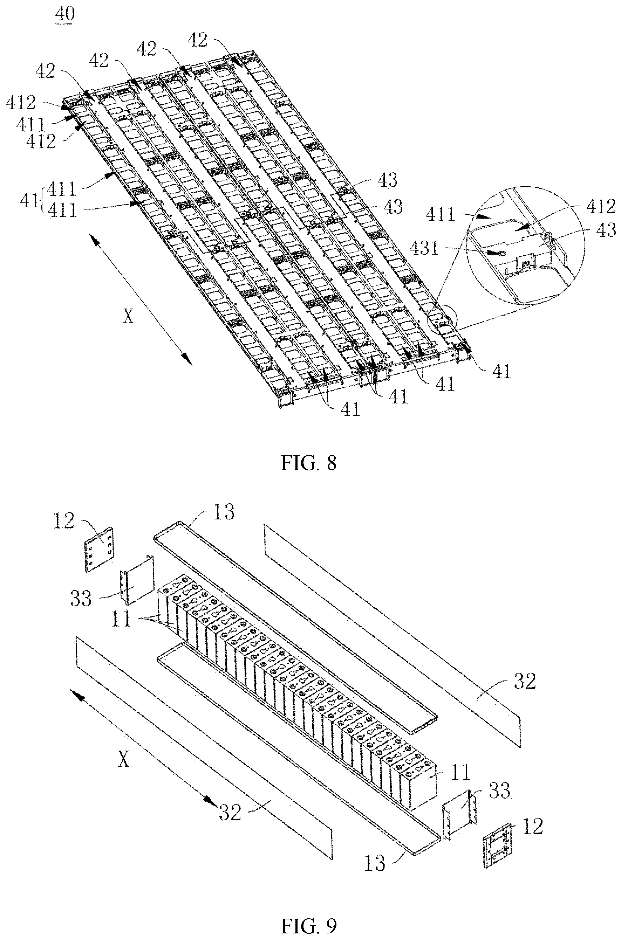

FIG. 8 is a diagram of a structure of a support 40 according to the embodiment in FIG. 3.

Refer to FIG. 3 to FIG. 8. To ensure stable connections between the plurality of busbars 21 and the positive pole 111 or the negative pole 112 of the cell 11, that is, to ensure stability of the connection between the cell 11 and the busbar 21, in some embodiments, the battery pack 4 further includes the support 40, and the support 40 is disposed on the surface 115 on which the poles 101 of the plurality of cells 11 in the plurality of battery modules 10 are located. It may be understood that there may be one support 40. For example, one large support 40 covers a plurality of battery modules 10. There may be a plurality of supports 40, and the plurality of supports 40 correspondingly cover a plurality of battery modules 10. For example, one support 40 may correspondingly cover one battery module 10, one support 40 correspondingly covers two adjacent battery modules 10, or the like.

A plurality of columns of strip-shaped groove groups 41 for mounting the busbar 21 are disposed on the support 40, and the plurality of columns of strip-shaped groove groups 41 are spaced in the width direction Y of the battery pack 4. Each column of strip-shaped groove groups 41 includes a plurality of strip-shaped grooves 411 spaced in the length direction X of the battery pack 4, and a position that is of each strip-shaped groove 411 and that corresponds to the positive pole 111 or the negative pole 112 of the cell 11 penetrates a bottom wall of the strip-shaped groove 411. In other words, a through hole 412 is disposed in a position that is on the bottom wall of the strip-shaped groove 411 and that is directly opposite the positive pole 111 or the negative pole 112 of the cell 11 in the height direction Z of the battery pack 4. One busbar 21 may be mounted in each strip-shaped groove 411. The busbar 21 is connected to the positive pole 111 or the negative pole 112 of the cell 11 via the through hole 412. The busbar 21 is installed in the strip-shaped groove 411, so that a position of the busbar 21 can be effectively limited, to ensure stability of the busbar 21, and ensure stability of a connection between the busbar 21 and the positive pole 111 or the negative pole 112 of the cell 11.

It may be understood that the support 40 is made of an insulation material, for example, a plastic material, so that after the plurality of busbars 21 are correspondingly mounted in the plurality of strip-shaped grooves 411, a creepage distance between adjacent busbars 21 can be further increased, to further improve safety of the battery pack 4 in a normal operating state.

When one support 40 correspondingly covers one battery module 10, there are two columns of strip-shaped groove groups 41 on the support 40, and the two columns of strip-shaped groove groups 41 are respectively configured to assemble two columns of busbars 21. In the width direction Y of the battery pack 4, the two columns of strip-shaped groove groups 41 are located on two sides of pressure relief valves 113 of a plurality of cells 11 in the battery module 10. In some implementations, strip-shaped limiting grooves 42 extending in the length direction X of the battery pack 4 are further disposed on the support 40, and the two columns of strip-shaped groove groups 41 are located on two sides of the limiting groove 42. In other words, in the height direction Z of the battery pack 4, the limiting groove 42 is located at an upper part of the pressure relief valves 113 of the plurality of cells 11. The limiting groove 42 is configured to mount a flexible printed circuit 50 (Flexible Printed Circuit, FPC) (as shown in FIG. 3).

When one support 40 simultaneously covers a plurality of battery modules 10, there are more than two columns of strip-shaped groove groups 41. However, in the width direction Y of the battery pack 4, the strip-shaped groove groups 41 are disposed on two sides of each limiting groove 42, and two columns of groups of limiting grooves 42 are disposed between two adjacent limiting grooves 42.

Specifically, to detect a status of the cell 11 in the battery pack 4, for example, detect parameters such as a temperature, a voltage, and a current of the cell 11 in the battery pack 4, to determine whether the status of the cell 11 in the battery pack 4 is normal, the battery pack 4 in this embodiment of this application includes the flexible printed circuit 50, and the flexible printed circuit 50 is separately connected to the plurality of cells 11. For example, the plurality of cells 11 in each battery module 10 may be connected via one flexible printed circuit 50, to detect statuses of the plurality of cells 11 in the battery module 10.

Refer to FIG. 4 to FIG. 8. To fully use space at positions directly opposite the pressure relief valves 113 of the plurality of cells 11 in the height direction Z of the battery pack 4, in some implementations, the flexible printed circuit 50 is disposed in a position directly opposite the pressure relief valve 113. For example, the flexible printed circuit 50 is disposed in the limiting groove 42, so that the space at the positions directly opposite the pressure relief valves 113 of the plurality of cells 11 in the height direction Z of the battery pack 4 is fully used. This facilitates a miniaturization design of the battery pack 4. In addition, the busbars 21 on two sides of the flexible printed circuit 50 are covered with the first isolation tape 31. Therefore, even if the pressure relief valve 113 of the cell 11 sprays gas to break the flexible printed circuit 50, and conducting wire scraps in the flexible printed circuit 50 fly around, through isolation of the first isolation tape 31, the conducting wire scrap is not in contact with the busbar 21, so that the short circuit between the plurality of busbars 21 can be avoided.

The two columns of busbars 21 on the plurality of cells 11 in each battery module 10 are respectively located on the two sides of the pressure relief valve 113. Therefore, the two columns of busbars 21 are far away from each other, and even if thermal runaway occurs in the cell 11, expansion of the cell 11 basically does not cause the two columns of busbars 21 to be in contact and short-circuited. However, a distance between busbars 21 located on two adjacent battery modules 10 is usually small. When the cell 11 deforms due to thermal runaway, the busbars 21 on the two adjacent battery modules 10 are easily in contact and short-circuited. Refer to FIG. 4 to FIG. 8. To avoid a short circuit problem between the busbars 21 on the adjacent battery modules 10, in some embodiments, some of the plurality of first isolation tapes 31 include two integrally formed parts, one part 311 covers the surface 211 that is of the busbars 21 and that is away from the plurality of cells 11, and the other part 312 covers a surface 212 that is of the busbars 21 and that is away from the pressure relief valves 113. In other words, one part 311 covers the surface 211 that is of the busbars 21 and that is away from the plurality of cells 11, and the other part 312 is located between two adjacent busbars 21 on the two adjacent battery modules 10. In this way, the two adjacent busbars 21 on the two adjacent battery modules 10 are covered by the other part 312 of the first isolation tape 31. Therefore, even if the cell 11 expands and drives the busbar 21 to move, the short circuit does not occur between the adjacent busbars 21 on the two adjacent battery modules 10 because of isolation of the other part 312 of the first isolation tape 31.

Refer to FIG. 4 to FIG. 8. In some implementations, the first isolation tape 31 includes two integrally formed parts, one part 311 covers the busbars 21, and the other part 312 extends from the busbars 21 to side walls 114 of the plurality of cells 11, to cover a part or all of the side walls 114. The side walls 114 of the plurality of cells 11 are a surface adjacent to the surface 115 on which the poles 101 are located. Therefore, after the two adjacent battery modules 10 are arranged, the other part 312 of the first isolation tape 31 is located between side walls that are of the two adjacent battery modules 10 and that are disposed opposite to each other. Further, the other part 312 of the first isolation tape 31 may be disposed between the two adjacent busbars 21 on the plurality of cells 11 in the two adjacent battery modules 10. Therefore, even if the cell 11 expands and drives the busbar 21 to move, the short circuit does not occur between the adjacent busbars 21 on the two adjacent battery modules 10 because of isolation of the other part 312 of the first isolation tape 31, thereby improving the safety performance of the battery pack.

Refer to FIG. 4 to FIG. 8. To enable the first isolation tape 31 to stably cover the busbar 21, in some implementations, the first isolation tape 31 is fastened to the support 40. The first isolation tape 31 is fastened to the support 40, and the busbar 21 is disposed in the strip-shaped groove 411 of the support 40, so that the relative position between the first isolation tape 31 and the busbar 21 can remain fixed, and the first isolation tape 31 stably covers the busbar 21.

Refer to FIG. 4 to FIG. 8. In some implementations, the support 40 further includes a plurality of fastening stands 43, the plurality of fastening stands 43 are spaced in the strip-shaped groove 411 in the length direction X of the battery pack 4, the plurality of fastening stands 43 are provided with fastening holes 431, and the fastening hole 431 is configured to be fastened to the first isolation tape 31. Specifically, for example, the first isolation tape 31 may be fastened to the support 40 through fit between a rivet and the fastening hole 431. The first isolation tape 31 is fastened via the plurality of fastening holes 431 on the plurality of fastening stands 43, so that stability of fastening the first isolation tape 31 can also be improved.

Refer to FIG. 4 to FIG. 8. In some implementations, the fastening stand 43 is located between two adjacent busbars 21. In other words, the two adjacent busbars 21 are separated in the length direction X of the battery pack 4 via the fastening stand 43, to increase a creepage distance between the two adjacent busbars 21 and improve the safety performance.

It should be noted that the two adjacent busbars 21 on the two adjacent battery modules 10 in the foregoing descriptions mean that a busbar 21 on one battery module 10 is adjacent to a busbar 21 on the other battery module 10 adjacent to the busbar 21 on the battery module 10.

In some implementations, there are a plurality of supports 40. In the height direction Z of the battery pack 4, one support 40 is disposed on a side that is of each battery module 10 and that faces the top wall 71 of the housing 7. The plurality of supports 40 are spaced in the width direction Y of the battery pack 4, and the other part 312 of the first isolation tape 31 is located between two adjacent supports 40. Because the other part 312 of the first isolation tape 31 is located between the two adjacent supports 40, in a high-temperature environment, even if the support 40 is melted, the other part 312 of the first isolation tape 31 is still located between the adjacent busbars 21 on the two adjacent battery modules 10, so that the short circuit between the adjacent busbars 21 on the two adjacent battery modules 10 can be effectively avoided.

FIG. 9 is a diagram of an exploded structure of the battery module 10 in the battery pack 4 according to the embodiment in FIG. 1.

The first isolation tape 31 is disposed, so that the risk that the plurality of busbars 21 are short-circuited due to the housing 7 can be effectively reduced, the risk that the plurality of busbars 21 are short-circuited due to the impurity sprayed out of the pressure relief valve 113 of the cell 11 can be effectively reduced, and the risk of the short circuit between the adjacent busbars 21 on the adjacent battery modules 10 due to deformation can be reduced. In addition, there is another short circuit risk in the battery pack 4. For example, in a related technology, to prevent the cells 11 between the two adjacent battery modules 10 from being short-circuited, a mica sheet is usually disposed between the two adjacent battery modules 10 given that the mica sheet is resistant to a high temperature and insulated, and the short circuit between the cells 11 in the two adjacent battery modules 10 can be avoided via the mica sheet. However, when the cell 11 expands due to thermal runaway, because the mica sheet is made of a rigid material and is brittle, the mica sheet is broken due to expansion and squeezing of the cell 11. Consequently, insulation between the cells 11 in the adjacent battery modules 10 fails, which greatly increases the short circuit risk. In addition, because insulation of the mica sheet also fails after being exposed to water, and it is extremely difficult to dry the mica sheet after being exposed to water, the battery pack 4 using the mica sheet cannot be quickly put into use after a fire fighting operation.

To resolve the foregoing problem, refer to FIG. 2, FIG. 3, FIG. 5, and FIG. 9. In some embodiments, the battery pack 4 further includes a second isolation tape 32. The second isolation tape 32 is flexible, resistant to a high temperature, and insulated, and a temperature that the second isolation tape 32 can withstand is within 1000°C. In other words, when the second isolation tape 32 is within 1000°C, insulation and flexibility of the second isolation tape 32 can still be maintained.

The second isolation tape 32 is disposed between two adjacent battery modules 10, and the second isolation tape 32 is located between side walls that are of the two adjacent battery modules 10 and that are disposed opposite to each other. Because the second isolation tape 32 is resistant to the high temperature, when thermal runaway occurs in one or more cells 11, a high temperature generated by the cell 11 still cannot affect performance of the second isolation tape 32. Therefore, in a high-temperature environment, insulation between cells 11 of the two adjacent battery modules 10 can still be ensured, to prevent a short circuit between the cells 11 of the two adjacent battery modules 10. In addition, because the second isolation tape 32 is flexible, even if the cell 11 expands and squeezes the second isolation tape 32 in the high-temperature environment, the second isolation tape 32 cannot be damaged, to effectively suppress diffusion and deterioration of the thermal runaway of the cell 11.

In some implementations, the second isolation tape 32 is a ceramic composite strap, so that the second isolation tape 32 is easy to dry after being immersed in water. Therefore, after a fire extinguishing operation is performed on the battery pack 4, the second isolation tape 32 is also easy to dry for continued use.

Because the second isolation tape 32 is flexible, the second isolation tape 32 needs to be properly fastened, so that a function of the second isolation tape 32 can be effectively brought into play. In some implementations, each of the plurality of battery modules 10 further includes end plates 12 disposed at two ends in the arrangement direction of the plurality of cells 11 and a cable tie 13 configured to bind the plurality of cells 11 and the end plates 12. The plurality of cells 11 are bound together via the cable tie 13 and the end plates 12 at the two ends, to facilitate transportation and assembly.

Refer to FIG. 2, FIG. 3, FIG. 5, and FIG. 9. In the width direction Y of the battery pack 4, the second isolation tape 32 is disposed on each of two sides of the battery module 10, and the second isolation tape 32 is bound to two side surfaces, in the width direction Y of the battery pack 4, of the plurality of cells 11 in the battery module 10 via the cable tie 13. In this implementation, when the battery module 10 is assembled, the second isolation tape 32 is bound to the two side surfaces of the battery module 10 in the width direction Y of the battery pack 4 via the cable tie 13, so that the second isolation tape 32 is properly fastened, and when the plurality of battery modules 10 are subsequently mounted, the second isolation tape 32 does not need to be fastened in another fastening manner, thereby reducing difficulty in subsequently mounting the plurality of battery modules 10. In addition, the cable tie 13 is usually a metal cable tie 13, and an insulation coating of the cable tie 13 is usually not resistant to a high temperature. Therefore, the second isolation tape 32 is disposed between the plurality of cells 11 and the cable tie 13, so that in a high-temperature environment, even if the insulation coating of the cable tie 13 melts and fails, a short circuit between the plurality of cells 11 due to the cable tie 13 can be effectively avoided via the second isolation tape 32.

It may be understood that, in this embodiment of this application, the second isolation tape 32 may be bound to two side surfaces of each of the plurality of battery modules 10 in the width direction Y of the battery pack 4 via the cable tie 13.

To further improve protection capabilities of the first isolation tape 31 and the second isolation tape 32 against the short circuit phenomenon in the battery pack 4, in some implementations, in the height direction Z of the battery pack 4, the second isolation tape 32 extends to be in contact with the first isolation tape 31, so that a part of the second isolation tape 32 extends between the adjacent busbars 21 of the adjacent battery modules 10, thereby avoiding the short circuit problem between the adjacent busbars 21 on the adjacent battery modules 10.

In some implementations, the first isolation tape 31 and the second isolation tape 32 may be integrally disposed. During assembly, the second isolation tape 32 is first fastened to the two sides of the battery module 10 in the width direction Y of the battery pack 4 via the cable tie 13, the plurality of battery modules 10 are assembled into the lower box body 7b, the support 40 is mounted to the side that is of the battery module 10 and that faces the top wall 71 of the housing 7, then the plurality of busbars 21 are mounted in the plurality of strip-shaped grooves 411 of the support 40, and then the first isolation tape 31 covers the plurality of busbars 21, and is fastened to the support 40 or the busbar 21. In this manner, the impurity and the like can be effectively prevented from being in contact with the busbar 21 or the cell 11 through the first isolation tape 31 and the second isolation tape 32, thereby effectively reducing the probability of further deterioration after thermal runaway occurs in the cell 11.

In some implementations, there are a plurality of supports 40. In the height direction Z of the battery pack 4, one support 40 is disposed on a side that is of each battery module 10 and that faces the top wall 71 of the housing 7. The plurality of supports 40 are spaced in the width direction Y of the battery pack 4, and a part of the second isolation tape 32 extends between two adjacent supports 40. Because the part of the second isolation tape 32 extends between two adjacent supports 40, in a high-temperature environment, even if the support 40 is melted, the second isolation tape 32 is still located between the adjacent busbars 21 on the two adjacent battery modules 10, so that the short circuit between the adjacent busbars 21 on the two adjacent battery modules 10 can be effectively avoided.

Refer to FIG. 2, FIG. 3, and FIG. 7. To further reduce the short circuit risk in the battery pack 4, in some implementations, the battery pack 4 further includes a third isolation tape 33, and the third isolation tape 33 is flexible, resistant to a high temperature, and insulated, and a temperature range that the third isolation tape 33 can withstand is within 1000°C. In other words, when the third isolation tape 33 is within 1000°C, insulation and flexibility of the third isolation tape 33 can still be maintained.

The third isolation tape 33 is disposed between the cable tie 13 and the end plate 12, so that a problem that in a high-temperature environment, the cable tie 13 is electrically connected to the end plate 12, a short circuit occurs between the end plate 12 and the cell 11, and further a short circuit occurs between the cells 11 can be avoided.

The third isolation tape 33 may be disposed between the end plate 12 and the cell 11, to avoid an electrical connection between the cell 11 and the end plate 12 in a high-temperature environment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, wherein the battery pack comprises a housing, and a battery module, a plurality of busbars, and an insulated first isolation tape that are accommodated in the housing;
the battery module comprises a plurality of cells arranged in a length direction of the battery pack, the plurality of busbars are disposed on a surface on which poles of the plurality of cells are located, two adjacent cells in the plurality of cells are electrically connected via one of the plurality of busbars, and the plurality of busbars are arranged in the length direction of the battery pack; and
the first isolation tape extends in the length direction of the battery pack and covers a surface that is of the plurality of busbars and that is away from the plurality of cells, and there is a gap between the first isolation tape and pressure relief valves of the plurality of cells in a direction in which the poles and the pressure relief valves are spaced from each other.

2. The battery pack according to claim 1, wherein two columns of busbars are disposed on the surface on which the poles of the plurality of cells are located, the two columns of busbars are located on two sides of the pressure relief valves of the plurality of cells in the direction in which the poles and the pressure relief valves are spaced from each other, and each of the two columns of busbars comprises the plurality of busbars spaced in the length direction of the battery pack; and
two first isolation tapes respectively cover the two columns of busbars, and in the direction in which the poles and the pressure relief valves are spaced from each other, the two first isolation tapes are respectively located on the two sides of the pressure relief valves of the plurality of cells.

3. The battery pack according to claim 2, wherein each of the plurality of busbars is of a long strip-shaped structure extending in the length direction of the battery pack, and each busbar is completely covered by the first isolation tape; in the length direction of the battery pack, a length of the first isolation tape is greater than or equal to a length obtained by arranging the plurality of cells; and in the direction in which the poles and the pressure relief valves are spaced from each other, a width of the first isolation tape is greater than or equal to a width of the busbar.

4. The battery pack according to any one of claims 1 to 3, wherein the first isolation tape comprises two integrally formed parts, one part covers the busbars, and the other part extends from the busbars to side walls of the plurality of cells, to cover a part or all of the side walls, and the side walls of the plurality of cells are a surface adjacent to a surface on which the poles are located.

5. The battery pack according to any one of claims 1 to 3, wherein the first isolation tape is of a flexible structure, and the surface that is of the plurality of busbars and that is away from the plurality of cells is disposed in contact with the first isolation tape.

6. The battery pack according to any one of claims 1 to 3, wherein the first isolation tape has insulation performance when the cell is in a normal state or in a thermal runaway state.

7. The battery pack according to claim 6, wherein the first isolation tape has the insulation performance within a temperature range of less than 1000°C.

8. The battery pack according to claim 3, wherein the battery pack further comprises a support, the support is disposed on the surface on which the poles of the plurality of cells are located, the support comprises a strip-shaped groove extending in the length direction of the battery pack, the plurality of busbars are disposed in the strip-shaped groove, and the first isolation tape is fastened to the support.

9. The battery pack according to claim 8, wherein the support further comprises a plurality of fastening stands, the plurality of fastening stands are spaced in the strip-shaped groove in the length direction of the battery pack, the plurality of fastening stands are provided with fastening holes, and the fastening hole is configured to be fastened to the first isolation tape.

10. The battery pack according to claim 8, wherein there are a plurality of supports, there are a plurality of battery modules, in a height direction of the battery pack, one support is disposed on a side that is of each battery module and that faces a top wall of the housing, the plurality of supports are spaced in a width direction of the battery pack, the first isolation tape is of a flexible structure, and a part of the first isolation tape is located between two adjacent supports.

11. The battery pack according to any one of claims 1 to 3, wherein the busbar comprises a plurality of bottom plates electrically connected to the poles of the plurality of cells and an arch-shaped plate integrally formed between two adjacent bottom plates in the plurality of bottom plates, the arch-shaped plate is higher than the bottom plate in a height direction of the battery pack, the bottom plates are provided with fastening holes, and the fastening hole is configured to be fastened to the first isolation tape.

12. The battery pack according to any one of claims 1 to 3, wherein the battery pack further comprises a plurality of flexible and insulated second isolation tapes; and
there are a plurality of battery modules, the plurality of battery modules are arranged in a width direction of the battery pack, the second isolation tape is disposed between two adjacent battery modules, and the second isolation tape is located between side walls that are of the two adjacent battery modules and that are disposed opposite to each other.

13. The battery pack according to claim 12, wherein each of the plurality of battery modules further comprises end plates disposed at two ends in an arrangement direction of the plurality of cells and a cable tie configured to bind the plurality of cells and the end plates; and in the width direction of the battery pack, the second isolation tape is disposed on each of two sides of the battery module, and the second isolation tape is bound to two side surfaces of the plurality of cells in the width direction of the battery pack via the cable tie.

14. An energy storage cabinet, wherein the energy storage cabinet comprises a cabinet and one or more battery packs according to any one of claims 1 to 13, and the one or more battery packs are disposed in the cabinet.
